# EUROPEAN PATENT APPLICATION

(11) **EP 4 439 441 A1**
(43) Date of publication of application: **02.10.2024**
(21) Application number: 22898370.6
(22) Date of filing: 02.11.2022
(51) Int. Cl.: G06Q 50/10, G06Q 30/02

(54) **CARD ASSESSMENT DEVICE, CARD ASSESSMENT METHOD, PROGRAM, AND CARD IDENTIFICATION SYSTEM**

(30) Priority: 26.11.2021 JP 2021192166
(71) Applicant: Japan Novel Corporation, Tokyo 114-0002 (JP)
(72) Inventor: ONZUKA Makoto, Tokyo 114-0002 (JP)
(74) Representative: Wimmer, Hubert
(86) International application number: PCT/JP2022/041052
(87) International publication number: WO 2023/095586

(57) **Abstract**

To carry out trading card assessment swiftly and with high accuracy. A program causing a computer to execute: a step of accepting input of a card type of a target trading card; a step of extracting a feature image including a specific design pattern from a card image obtained by optically reading a target trading card and determining the series to which the target trading card belongs based on the extracted feature image; a step of determining the content of the target trading card by extracting a feature amount from the card image of the target trading card and collating the extracted feature amount with a feature database; and a step of displaying on a display device the content of the target trading card.

## Description

### TECHNICAL FIELD

The present invention relates to a card determination apparatus, a card determination method, a program, and a card determination system used when assessing the content of a trading card.

### BACKGROUND ART

Trading cards are cards with various design patterns attached to them, and are widely used for purposes such as exchanging and collection, or for playing games using these cards. Further, trading cards that are no longer needed are purchased and sold to other users. Stores that carry out such purchases and sales often receive a large number of trading cards at once from users who wish to sell them, and there is a need for a technology that can swiftly and accurately assess the purchase price. (For example, refer to Patent Document 1) . Trading cards have almost the same design pattern, but there may be partial design pattern differences or there may be different surface finishing. And due to these slight differences, even though the design patterns are almost the same, the market value can vary greatly and purchase prices of some trading cards may differ. Even in such a case, there is a need for a technology that can perform assessment swiftly and with high accuracy.

### PRIOR ART DOCUMENT

### PATENT DOCUMENT

Patent Document 1: Japanese Patent Application Laid-Open No.2014-215930

### SUMMARY OF THE INVENTION

### TECHNICAL PROBLEM

In a specific aspect, it is an object of the present invention to provide a technology that allows trading card assessment to be carried out swiftly and with high accuracy.

### SOLUTION TO THE PROBLEM

(1) A program according to one aspect of the present invention is a program for assessing a content of a trading card in which there are a plurality of card types with different themes and a plurality of series for each card type, the program causing a computer to execute: (a) a first step of accepting input of the card type of a target trading card to be assessed; (b) a second step of extracting a feature image including a specific design pattern from a card image obtained by optically reading the target trading card and determining the series to which the target trading card belongs based on the extracted feature image; (c) a third step of determining the content of the target trading card by extracting a feature amount from the card image of the target trading card and collating the extracted feature amount with a feature database; and (d) a fourth step of displaying on a display device the content of the target trading card determined in the third step.
(2) A card assessment method according to one aspect of the present invention is a card assessment method executed by a computer for assessing a content of a trading card in which there are a plurality of card types with different themes and a plurality of series for each card type, the card assessment method including: (a) a first step of accepting input of the card type of a target trading card to be assessed; (b) a second step of extracting a feature image including a specific design pattern from a card image obtained by optically reading the target trading card and determining the series to which the target trading card belongs based on the extracted feature image; (c) a third step of determining the content of the target trading card by extracting a feature amount from the card image of the target trading card and collating the extracted feature amount with a feature amount database; and (d) a fourth step of displaying on a display device the content of the target trading card determined in the third step.
(3) A card assessment apparatus according to one aspect of the present invention is a card assessment apparatus for assessing a content of a trading card in which there are a plurality of card types with different themes and a plurality of series for each card type, the card assessment apparatus including: (a) a reception unit that accepts input of the card type of a target trading card to be assessed; (b) a series determination unit that extracts a feature image including a specific design pattern from a card image obtained by optically reading the target trading card and determines the series to which the target trading card belongs based on the extracted feature image; (c) a feature amount collation unit that determines the content of the target trading card by extracting a feature amount from the card image of the target trading card and collates the extracted feature amount with a feature amount database; and (d) a display control unit that causes a display device to display the content of the determined target trading card.
(4) A card assessment system according to one aspect of the present invention is a card assessment system including: (a) the card assessment apparatus according to the above-described (3); (b) an optical reading device connected to the card assessment apparatus which optically reads the target trading card and provides the card image to the card assessment apparatus; and (c) an external server that is communicably connected to the card assessment apparatus via a network and transmits data to the card assessment apparatus in order to construct the feature amount database.

According to the above configurations, there is provided a technology that allows trading card assessment to be carried out swiftly and with high accuracy.

### BRIEF DESCRIPTION OF THE DRAWINGS

FIG. 1 is a diagram showing an overall configuration of a card assessment system according to one embodiment.
FIG. 2 is a block diagram showing detailed configuration of the card assessment apparatus.
FIG. 3 is a diagram showing an example of the configuration of a computer system used in a card assessment apparatus.
FIG. 4A is a diagram for explaining the configurations of card types and series of the trading cards.
FIG. 4B is a diagram schematically showing an example of the configuration of the design pattern of a trading card.
FIG. 5 is a flowchart for explaining the operation of the card characteristic apparatus.
FIG. 6 is a diagram showing an example of an operation screen displayed on a display unit.
FIG. 7A is a diagram for explaining a configuration example of data used for template matching.
FIG. 7B is a diagram schematically showing the specifics of the template.
FIGs. 8A and 8B are enlarged views of the lower left side of the trading card 14, respectively.
FIG. 9 is a diagram showing a display example of an assessment result.
FIG. 10 is a flowchart for explaining the procedure for generating feature amount.
FIG. 11A is a diagram showing an example of texture image data.
FIG. 11B is a diagram showing an example of region image data.
FIG. 12 is a diagram showing an example of a feature amount database.

### MODE FOR CARRYING OUT THE INVENTION

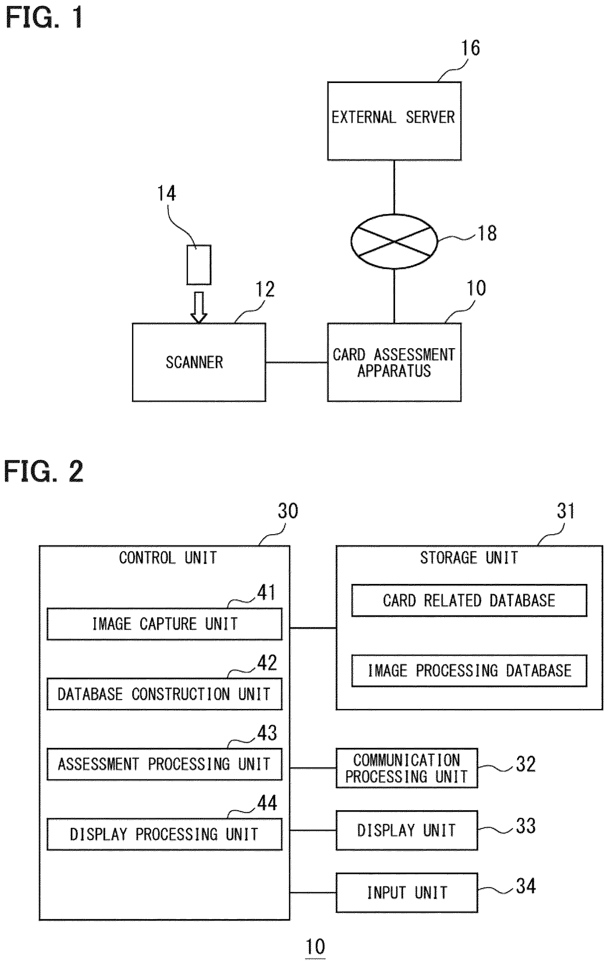

FIG. 1 is a diagram showing an overall configuration of a card assessment system according to one embodiment. The card assessment system of this embodiment shown in FIG. 1 is a system for assessing trading cards, and is configured to include a card assessment apparatus 10, a scanner (optical reading device) 12, and an external server 16. The card assessment apparatus 10 and the external server 16 are connected to each other via a network such as the Internet so that data can be communicated with each other.

The card assessment apparatus 10 performs predetermined image processing based on the card image data of a trading card 14 optically read using the scanner 12 to determine the content (card name, purchase price, etc.) of the trading card 14. In this assessment process, data obtained in advance from the external server 16 is used. The card assessment apparatus 10 is realized, for example, by installing a predetermined program on a laptop personal computer or a desktop personal computer. Note that the card assessment apparatus 10 may be configured using an information processing apparatus manufactured as a dedicated apparatus.

The scanner 12 optically reads the surface of the trading card 14, generates image data (card image) which corresponds to the trading card 14, and outputs to the card assessment apparatus 10. The scanner 12 of this embodiment can continuously read a plurality of trading cards 14. As for the scanner 12, for example, a commercially available scanner that is capable of reading color information and has a reading resolution of about 150 dpi or higher can be used.

The external server 16 is installed at a location different from the store in which the card assessment apparatus 10 is installed, and provides various data to the card assessment apparatus 10 via a network 18. In detail, the external server 16 stores a database containing data necessary for image processing in relation to the assessment process of the trading card 14 and data necessary for determining the purchase price, etc., and transmits these data to the card assessment apparatus 10 in response to a request from the card assessment apparatus 10.

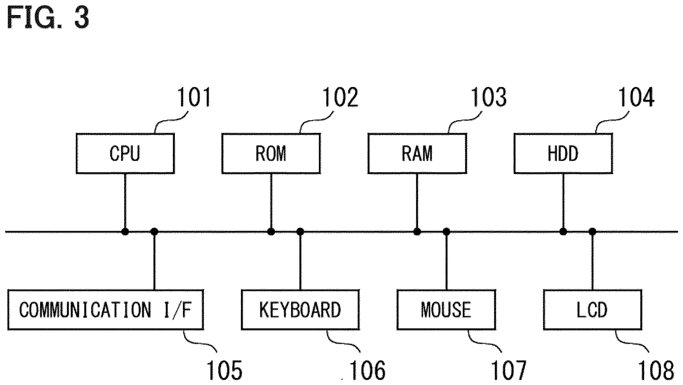

FIG. 2 is a block diagram showing detailed configuration of the card assessment apparatus. Here, as described above, the card assessment apparatus 10 is realized by executing a program on a computer system equipped with a processor etc. (Refer to FIG. 3 to be described later). Here, the configuration of the card assessment apparatus 10 will be described using functional blocks focusing on each function realized by executing the program. The card assessment apparatus 10 of this embodiment is configured to include a control unit 30, a storage unit 31, a communication processing unit 32, a display unit 33, and an input unit 34.

The control unit 30 executes control related to the assessment process of the trading card 14, and is configured to include an image capture unit 41, a database construction unit 42, an assessment processing unit 43, and a display processing unit 44. Here, note that the assessment processing unit 43 corresponds to "a reception unit", "a series determination unit", and "a feature amount collation unit", and the display processing unit 44 corresponds to "a display control unit".

The image capture unit 41 captures image data of the trading card 14 generated by the scanner 12.

The database construction unit 42 acquires data from the external server 16 via the network 18, and constructs a card related database and an image processing database in the storage unit 31 based on the acquired data. The construction of the card related database and the image processing database is performed once a week, for example, in accordance with the timing when the data stored in the external server 16 is updated.

The assessment processing unit 43 performs predetermined image processing on the image data captured by the image capture unit 41 using the card related database and the image processing database stored in the storage unit 31 and thereby determines the content of the trading card 14.

The display processing unit 44 performs data processing related to the image display on the display unit 33.

The storage unit 31 stores the card related database and the image processing database constructed by the database construction unit 42. Further, the storage unit 31 stores image data captured by the image capture unit 41.

The communication processing unit 32 performs data communication processing with the external server 16 via the network 18. The display unit 33 displays images such as assessment processing results based on the display data output from the display processing unit 44. The input unit 34 is used to input various operation instructions to the control unit 30.

FIG. 3 is a diagram showing an example of the configuration of a computer system used in the card assessment apparatus. The illustrated computer system is configured to include a CPU (central processing unit) 101, a ROM (read-only memory) 102, a RAM (Random Access Memory) 103, a HDD (hard disk drive) 104, a communication I/F (interface) 105, a keyboard 106, a mouse 107, and a LCD (liquid crystal display) 108. These CPU 101, etc. are connected to each other by a bus. Here, note that the HDD 104 is merely an example of a mass storage device, and a solid state drive or the like may be used instead. Similarly, the LCD 108 is merely an example of a display device, and an organic EL display device or the like may be used instead.

The CPU 101 performs information processing by executing the program. The ROM 102 stores basic control programs and the like necessary for the operation of the CPU 101. The RAM 103 temporarily stores data necessary for information processing by the CPU 101. These comprise the control unit 30 described above. The HDD 104 is a large-capacity storage device for storing data, and stores programs, data, etc. for realizing each function of the card assessment apparatus 10 described above. The HDD 104 comprises the storage unit 31 described above. Further, the communication I/F 105 comprises the communication processing unit 32 described above, the LCD 108 comprises the display unit 33 described above, and the keyboard 106 and the mouse 107 comprise the input unit 34 described above.

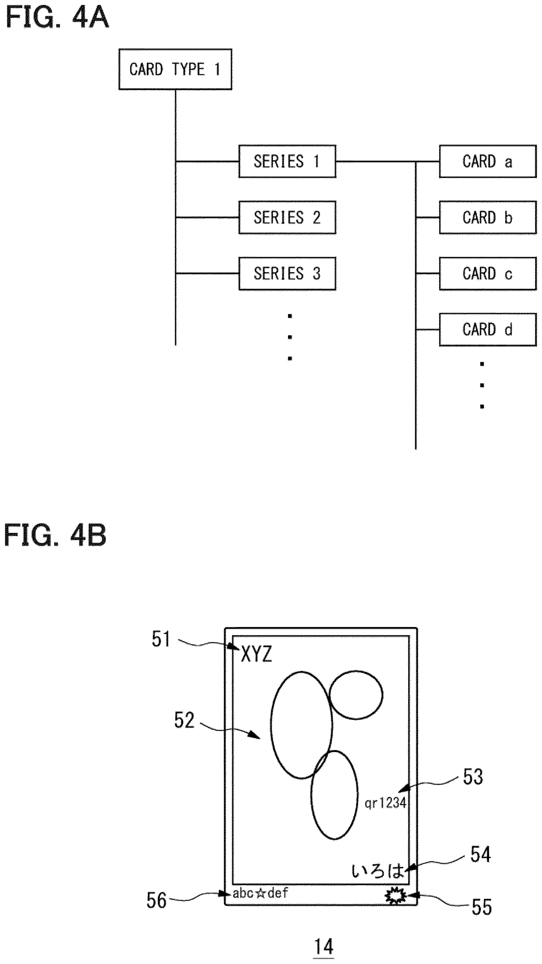

FIG. 4A is a diagram for explaining the configurations of card types and series of the trading cards . The trading cards, for example, have different graphic symbols and worldviews depending on their seller. Referring to card type 1, which is a type of trading card provided by a certain seller, there are multiple series 1, 2, 3, etc. due to differences in release time, etc., and the content of the trading cards for each series is different. There are many types of such trading cards, and they are continuously released, and the number of card types and series continue to increase day by day. Further, there are card a, b, c, ... that belong to each of these series. The trading cards are provided in such a configuration for each card type depending on the seller. Furthermore, even when trading cards have the similar content, there may be slight differences between the series, and the market value may differ depending on the series to which they belong.

FIG. 4B is a diagram schematically showing an example of the configuration of the design pattern of a trading card. The illustrated trading card 14 has a title character 51 indicating the card type in the upper left, a design pattern 52 such as a graphic symbol in the center of the card, and additional characters 53 and 54 around the design pattern 52, a distinctive logo mark 55 on the lower right side of the card, and additional characters 56 on the lower left side of the card. Here, note that this is merely an example, and not all trading cards 14 include all the same elements, and the arrangement of the design pattern and characters varies depending on the card type.

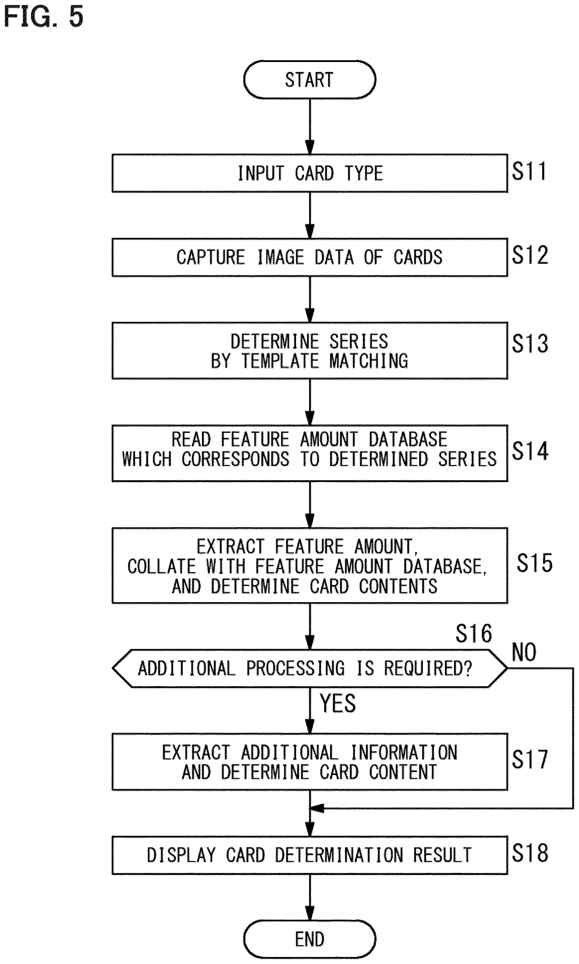

FIG. 5 is a flowchart for explaining the operation of the card characteristic apparatus. Here, note that the order of the process in each step may be changed as appropriate as long as no inconsistency occurs in the result of the information processing, and other process may be further added.

As a premise of the process described below, it is assumed that a plurality of trading cards belonging to one specific card type are set in the scanner 12. That is, it is not assumed that trading cards belonging to different card types are set in the scanner 12 in a mixed state. Here, note that sorting by card type is carried out in advance by, for example, the user or a store staff.

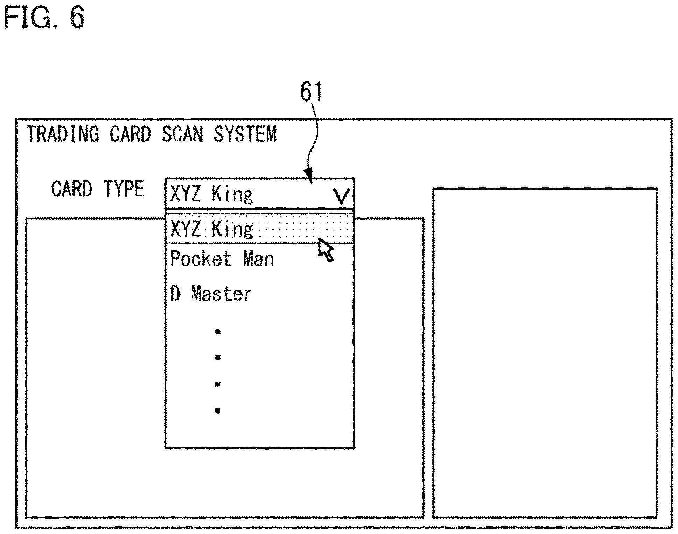

The assessment processing unit 43 receives an input of the type of trading card (card type) to be assessed based on the instruction input by the user by use of the input unit 34 (step S11) . For example, as illustrated in FIG. 6, an operation screen is displayed on the display unit 33, and the user can select a card type from a card type selection tab 61 included therein using the input unit 34. Here, candidates such as XYZ King, Pocket Man, D Master, etc. are displayed as card type candidates, and an example is shown in which "XYZ King" is selected from among them.

Next, the image capture unit 41 sends an operation instruction to the scanner 12 to carry out reading of each of the trading cards 14, and captures image data corresponding to each of the trading cards 14 from the scanner 12 (step S12) . The captured image data is temporarily stored in the storage unit 31, for example. Here, note that image processing such as tilt correction may be performed on the captured image data as appropriate.

Next, the assessment processing unit 43 performs pattern matching processing on the captured image data, based on the distinctive logo mark 55, which is an example of a characteristic image included in each card for each card type(refer to FIG. 4B), and thereby, determines the series to which the cards corresponding to these image data belong (step S13). Specifically, the image data is searched for portions that match these templates, and the series is determined based on the matching templates. Here, in addition to the pattern matching process using the logo mark 55, the series may be determined by using, for example, a character recognition process using additional characters 53, 54 as an example of a characteristic image.

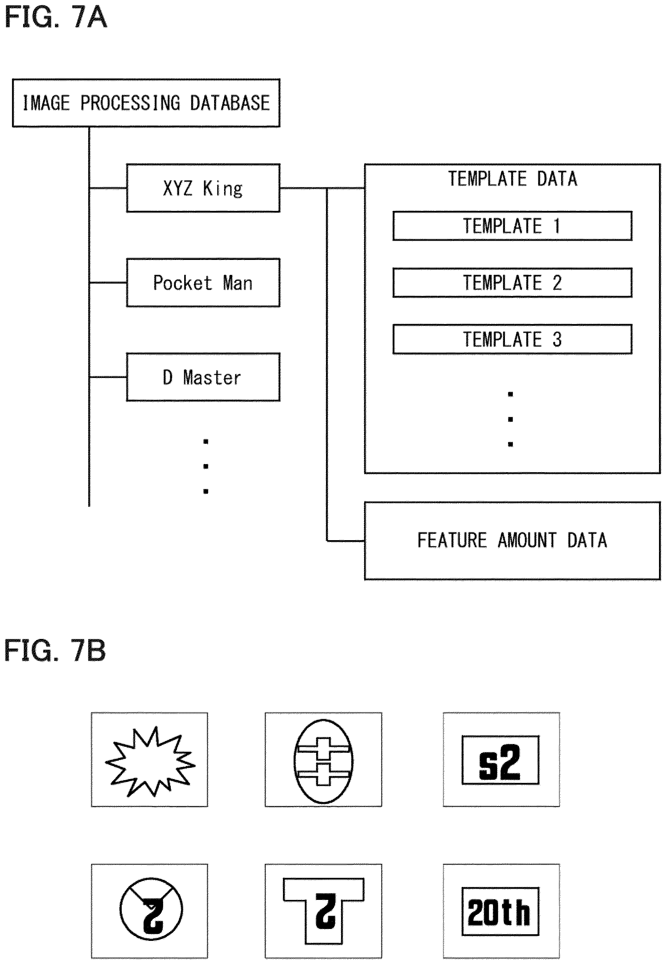

FIG. 7A is a diagram for explaining a configuration example of data used for template matching. The storage unit 31 stores an image processing database which includes a plurality of templates 1, 2, 3, ... corresponding to the distinctive logo mark 55 which may be included in each card type (XYZ King, Pocket Man, etc.). Further, included is a feature amount data for each card type, which will be described in detail later.

FIG. 7B is a diagram schematically showing the specifics of the template. Here, six templates are shown as an example, but in reality, more templates are prepared as required. Furthermore, each template is associated with information regarding its corresponding series. In step S13, the series to which the trading card 14 belongs is determined by performing matching processing using template data corresponding to the card type specified in step 511. By specifying the card type in advance, it is possible to reduce the amount of template data used for the matching process and reduce calculation time.

Next, the assessment processing unit 43 reads from the image processing database a feature amount database which corresponds to the determined series (step S14). Next, the assessment processing unit 43 extracts the feature amount from the image data captured from the scanner 12 and by collating the feature amount with the feature amount database read in step S14, the assessment processing unit 43 determines the card content of the trading card 14 which corresponds to the image data (step S15). Details of the collation using the feature amount will be described later.

Next, when the accuracy of the matching result does not meet a predetermined criteria such as when matching rate between the feature amount of the card determined as the first candidate by collating with the feature amount database and the feature amount of the actual trading card 14 is low, and when additional processing is required to determine the card (step S16; YES), the assessment processing unit 43 extracts additional information and determines the card content based on the information (step S17). Here, note that when additional processing is not required (step S16; NO), the process of step S17 is omitted.

Here, as the additional information, for example, additional characters 53, 54, and 56 shown in FIG. 4B can be used. As an determination method using these additional information, a match can be determined by performing character recognition processing to convert it into text data and collating them with previously prepared collation data. Alternatively, pattern matching processing using a template similar to that described above may be used.

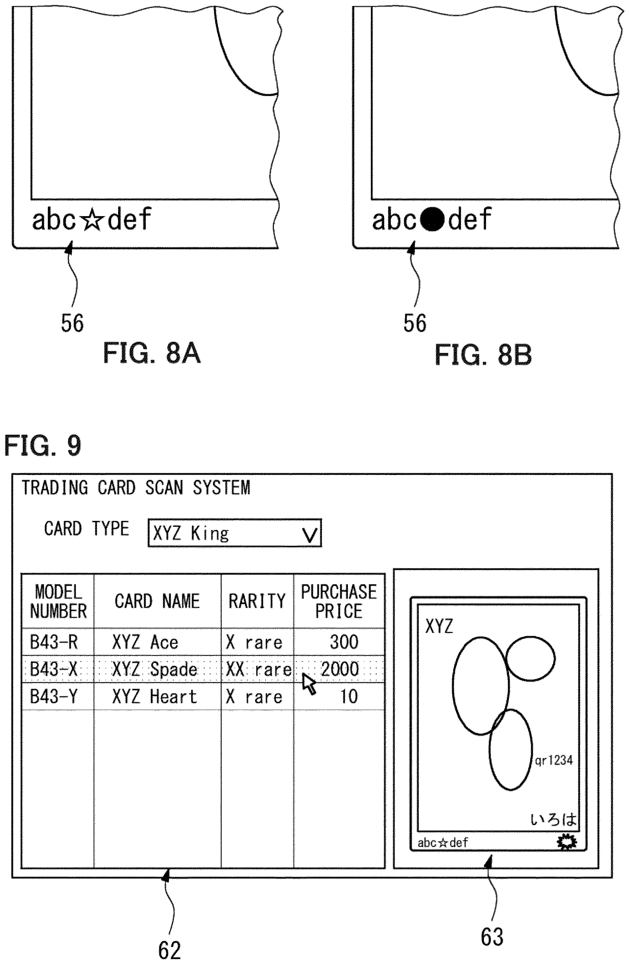

As an example, a method of using additional characters 56 will be described using FIGs. 8A and 8B. FIGs. 8A and 8B are respectively enlarged views of lower left side of the trading card 14. Comparing the additional characters 56 included in the trading card 14 in FIG. 8A and the additional characters 56 included in the trading card 14 in FIG. 8B, most of the characters are the same. However, the portion that is marked with "*" in the former is marked with "•" in the latter. Based on such differences, the card content can be recognized and determined.

Here, note that additional processing may be required not only when the matching rate is low, but also when the difference in the matching rate between the first candidate and the second candidate is smaller than a reference value. For example, when the above described matching rate is expressed as a percentage, additional processing may be required in a situation where the matching rate is 50% or less, or the difference in the matching rate between the first candidate and the second candidate is 10% or less.

When the above-described processing is carried out for each of the trading cards 14, the assessment processing unit 43 reads data such as the purchase price corresponding to the determined card from the card related database. Then, the display processing unit 44 causes the display unit 33 to display the card determination result (step S18). Further, the assessment processing unit 43 may cause the storage unit 31 to store data of the card determination result.

FIG. 9 is a diagram showing a display example of the assessment result. This display example includes, as the card determination result, a determination result display unit 62 which includes a model number, a card name, rarity, and a purchase price, and includes a card image display unit 63 which displays image data corresponding to the selected card using the input unit 34. Here, note that "rarity" is defined as information indicating the rarity of a card. For example, a card with a low number of circulation will have a high rarity. Here in the diagram, high rarity is expressed as XX rare.

Here, the feature amount used to collate the trading card 14 in step 14 described above is not particularly limited, and the feature amount can be applied using various methods. Below, the feature amount as an example used in this embodiment will be described in detail.

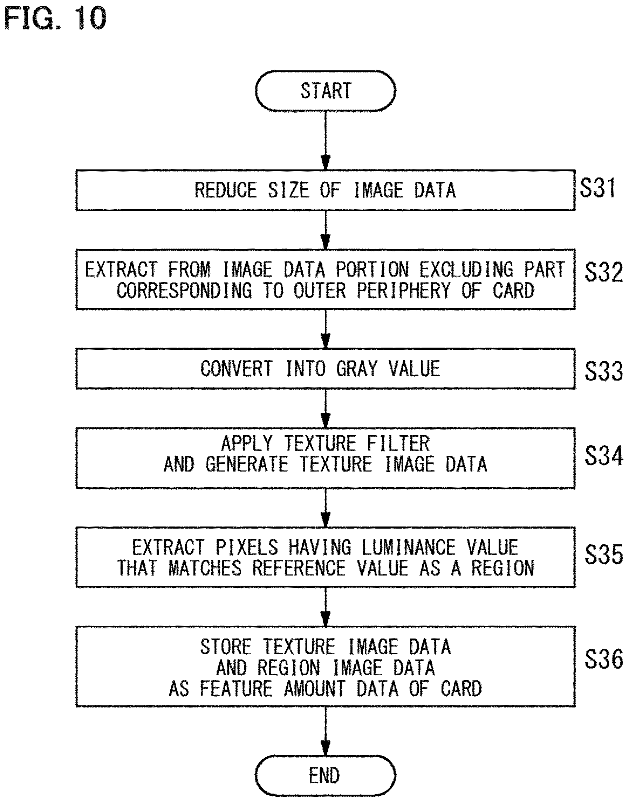

FIG. 10 is a flowchart for explaining the procedure for generating the feature amount. The processing here is performed by the assessment processing unit 43. Further, the feature amount database obtained by performing similar processing is stored in advance in the external server 16 and provided to the card assessment apparatus 10.

The assessment processing unit 43 reduces the size of the captured image data (step S31). Although this processing is intended to reduce the amount of information as an image and reduce the processing load, in principle, it may be omitted.

Next, the assessment processing unit 43 extracts from the image data a portion excluding the region which corresponds to the outer periphery of the card (step S32) . This is intended to extract a stable region since noise may enter the outer periphery depending on the reading accuracy of the scanner 12, but in principle, this may be omitted.

Next, the assessment processing unit 43 converts the image data into gray values (step S33). Since image data is obtained as a color image when captured by the scanner 12, the aim is to reduce the amount of information and reduce the processing load by converting color image data to gray scale image data including only luminance values.

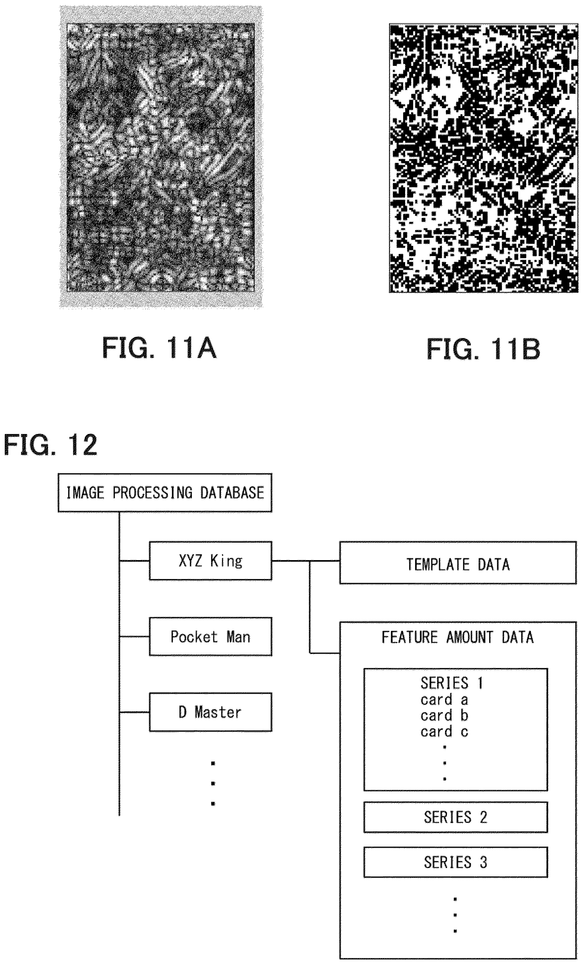

Next, the assessment processing unit 43 applies an arbitrary texture filter to the image data which has been converted to gray scale image data, and generates texture image data (step S34). Various known texture filters can be used as the texture filter. An example of texture image data is shown in FIG. 11A.

Next, from the texture image data, the assessment processing unit 43 extracts pixels having a luminance value that matches the reference value as a region (step S35). For example, if the luminance value is specified in a numerical range from 0 to 255, then as an example, pixels having a luminance value which ranges from 90 to 255 are extracted. An example of a region image data is shown in FIG. 11B. The region shown in black is a region having a constant luminance value.

The assessment processing unit 43 stores the texture image data and the region image data obtained as described above in the storage unit 31 as feature amount data corresponding to the card (step S36). Further, this feature amount data is then used in the collation process in step S15 described above. For example, in the region image data, when matching rate of the region with a certain luminance value is compared and the matching rate which is higher than a reference value (for example, 90% or higher) is obtained, the card content corresponding to the feature amount data will be determined as the assessment result.

Further, feature amount data is obtained for multiple trading cards in advance through similar processing, then the feature amount data is classified by card type and series and stored in the external server 16 as an image processing database, and is transmitted to the card assessment apparatus 10 and stored in the storage unit 31.

FIG. 12 shows an example of a feature amount database. For example, with regard to the card type "XYZ King", the feature amount data corresponding to this card type is classified into series 1, 2, 3, and so on. And for example, feature amount data corresponding to cards a, b, c, ... which belongs to series 1 is stored. Then, for example, when the matching rate for card a is equal to or greater than the reference value in the matching process, the card content corresponding to the image data is determined as "card a", and the corresponding purchase information, name, etc. are determined.

According to the embodiment described above, it is possible to carry out trading card assessment swiftly and with high accuracy. Specifically, a card type is first selected, then a series is determined from the selected card type, and collation using feature amount data is performed based on the series, thereby calculation time is shortened. Further, when the accuracy of determination based on the feature amount data is low, determination processing based on additional information is additionally executed, so that the accuracy of card determination can be further improved. Further, since the processing for determining card types and the data used therein are separated from the processing for determining series and the data used therein, when a new series appears for a certain card type, it is basically sufficient to simply add the data used to determine the new series, for example. Therefore, there is an advantage that the influence on the entire system can be kept to a minimum and the system can be updated easily.

Here, note that the present invention is not limited to the content of the embodiment described above, and can be implemented with various modifications within the scope of the gist of the present invention. For example, in the embodiment described above, the image data obtained by the scanner 12 is used immediately, but it does not necessarily have to be used immediately. For example, image data obtained using another scanner device, camera, etc. that is not connected to the card assessment apparatus 10 may be provided to the card assessment apparatus 10 via data communication or a storage medium such as a USB memory. Further, in the above-described embodiment, the card type is selected from the tabs, but it is also possible to input characters directly or by using voice recognition software.

### REFERENCE SIGNS LIST

- 10:: Card assessment apparatus
- 12:: Scanner
- 14:: Trading card
- 16:: External server
- 18:: Network
- 30:: Control unit
- 31:: Storage unit
- 32:: Communication processing unit
- 33:: Display unit
- 34:: Input unit
- 41:: Image capture unit
- 42:: Database construction unit
- 43:: Assessment processing unit
- 44:: Display processing unit
- 51:: Title character
- 52:: Design Pattern
- 53, 54, 56:: Additional character
- 55:: Logo mark
- 61:: Card type selection tab
- 62:: Determination result display unit
- 63:: Card image display unit

## Claims

1. A program for assessing a content of a trading card in which there are a plurality of card types with different themes and a plurality of series for each card type, the program causing a computer to execute:
a first step of accepting input of the card type of a target trading card to be assessed;
a second step of extracting a feature image including a specific design pattern from a card image obtained by optically reading the target trading card and determining the series to which the target trading card belongs based on the extracted feature image;
a third step of determining the content of the target trading card by extracting a feature amount from the card image of the target trading card and collating the extracted feature amount with a feature amount database; and
a fourth step of displaying on a display device the content of the target trading card determined in the third step.

2. The program according to claim 1,
wherein, in the second step, the feature image is extracted using an image processing data corresponding to the card type input in the first step.

3. The program according to claim 1 or claim 2,
wherein the feature image in the second step includes a logo mark image or a character image.

4. The program according to any one of claims 1 to 3,
wherein the processing in the second step is performed by pattern matching processing and/or character recognition processing.

5. The program according to any one of claims 1 to 4,
wherein, in the third step, the feature amount is collated using data corresponding to the series determined in the second step among data included in the feature amount database.

6. The program according to any one of claims 1 to 5,
wherein the feature amount in the third step is a texture image which is a gray scale image obtained by performing predetermined image processing on the card image, and/or is a region image obtained by extracting a region having a luminance value within a predetermined range of the texture image.

7. The program according to any one of claims 1 to 6,
wherein the content of the target trading card displayed in the fourth step includes at least a name and a purchase price of the target trading card.

8. The program according to any one of claims 1 to 7,
wherein, in the third step, when the accuracy of the matching result between the feature amount of the trading card and the feature amount database does not meet a predetermined criteria, then following the third step, a fifth step of extracting an additional information image that is an image indicating additional information included in the card image of the target trading card, and determining the content of the trading card based on the additional information image, is further included.

9. A card assessment method executed by a computer for assessing a content of a trading card in which there are a plurality of card types with different themes and a plurality of series for each card type, the card assessment method comprising:
a first step of accepting input of the card type of a target trading card to be assessed;
a second step of extracting a feature image including a specific design pattern from a card image obtained by optically reading the target trading card and determining the series to which the target trading card belongs based on the extracted feature image;
a third step of determining the content of the target trading card by extracting a feature amount from the card image of the target trading card and collating the extracted feature amount with a feature amount database; and
a fourth step of displaying on a display device the content of the target trading card determined in the third step.

10. A card assessment apparatus for assessing a content of a trading card in which there are a plurality of card types with different themes and a plurality of series for each card type, the card assessment apparatus comprising:
a reception unit that accepts input of the card type of a target trading card to be assessed;
a series determination unit that extracts a feature image including a specific design pattern from a card image obtained by optically reading the target trading card and determines the series to which the target trading card belongs based on the extracted feature image;
a feature amount collation unit that determines the content of the target trading card by extracting a feature amount from the card image of the target trading card and collates the extracted feature amount with a feature amount database; and
a display control unit that causes a display device to display the content of the determined target trading card.

11. A card assessment system comprising:
the card assessment apparatus according to claim 10;
an optical reading device connected to the card assessment apparatus which optically reads the target trading card and provides the card image to the card assessment apparatus; and an external server that is communicably connected to the card assessment apparatus via a network and transmits data to the card assessment apparatus in order to construct the feature amount database.
